# EUROPEAN PATENT SPECIFICATION

(11) **EP 4 349 775 B1**
(45) Date of publication and mention of the grant of the patent: **19.11.2025**
(21) Application number: 22832725.0
(22) Date of filing: 06.06.2022
(51) Int. Cl.: C01B 21/086, H01G 11/60, H01G 11/62, H01G 9/035, H01M 10/0568

(54) **METHOD FOR PURIFYING AQUEOUS SULFONYLIMIDE SOLUTION**
VERFAHREN ZUR REINIGUNG EINER WÄSSRIGEN SULFONYLIMIDLÖSUNG
MÉTHODE DE PURIFICATION D'UNE SOLUTION AQUEUSE DE SULFONYLIMIDE

(30) Priority: 30.06.2021 JP 2021109039
(43) Date of publication of application: 10.04.2024
(73) Proprietor: Nippon Shokubai Co., Ltd., Osaka-shi, Osaka 541-0043 (JP)
(72) Inventor: WATABE, Ryo, Suita-shi, Osaka 564-0034 (JP); KOBATAKE, Takayuki, Suita-shi, Osaka 564-0034 (JP); OOKUBO, Chie, Suita-shi, Osaka 564-0034 (JP); ARAKAWA, Motohiro, Suita-shi, Osaka 564-0034 (JP); TAKIDA, Hiroshi, Suita-shi, Osaka 564-0034 (JP)
(74) Representative: Germain Maureau
(86) International application number: PCT/JP2022/022788
(87) International publication number: WO 2023/276568

(56) References cited:
- WO-A1-2020/209018
- CN-A- 106 632 054
- CN-A- 106 632 054
- FR-A1- 3 081 723
- JP-A- 2012 219 037
- US-A1- 2019 379 088

## Description

### TECHNICAL FIELD

The present disclosure relates to a method for purifying an aqueous sulfonylimide solution.

### BACKGROUND ART

Various studies have been made on non-aqueous electrolyte solutions used in secondary batteries and materials thereof to improve the performance of secondary batteries such as lithium ion secondary batteries. For example, Patent Document 1 proposes an ionic conductive material containing an ionic compound represented by the formula Li⁺[(FSO₂)₂N]⁻, which is lithium bis(fluorosulfonyl)imide and will be hereinafter also referred to as "LiFSI," in a solution of an aprotic solvent. Some relevant documents are US 2019/379088 A1, FR 3 081 723 A1, CN 106 632 054 A.

### CITATION LIST

### PATENT DOCUMENT

Patent Document 1: Japanese Patent No. 3878206

### SUMMARY OF THE INVENTION

### TECHNICAL PROBLEM

FSO₃Li (lithium fluorosulfonate) is produced as a by-product of the synthesis of a sulfonylimide compound such as LiFSI or as a decomposition product of LiFSI. FSO₃Li is decomposed with a small amount of water and produces impurities such as SO₄²⁻ (sulfate ions) that may accelerate decomposition of LiFSI. This deteriorates LiFSI.

Patent Document 1 also describes that FSO₃Li is not stable in a cyclic ether solution and decomposes into LiF and SO₃ in cyclic ether.

Taking the storage stability of LiFSI into account, the concentration of FSO₃Li in LiFSI is preferably low. However, Patent Document 1 does not describe anything about reducing FSO₃Li.

In view of the foregoing, it is an object of the present disclosure to provide a purification method for reducing the concentration of FSO₃Li in an aqueous sulfonylimide solution containing a sulfonylimide compound, a method for producing a non-aqueous electrolyte solution using an aqueous sulfonylimide solution purified by the purification method, and a method for producing an electrolyte composition using the non-aqueous electrolyte solution obtained by the production method.

### SOLUTION TO THE PROBLEM

In order to achieve the above object, in the disclosed technique, an additional process is performed after the preparation of the aqueous sulfonylimide solution so that the concentration of FSO₃Li in the aqueous sulfonylimide solution is reduced by a simple method. The present disclosure will be specifically described below.

The invention is set out in independent method claim 1 which comprises the essential features of the invention. Further, preferred embodiments are described in dependent claims 2-5. A method for purifying an aqueous sulfonylimide solution of the present invention includes heating an aqueous sulfonylimide solution containing a sulfonylimide compound represented by the general formula (1): LiN(RSO₂)(FSO₂) (where R represents a fluorine atom, an alkyl group with 1 to 6 carbon atoms, or a fluoroalkyl group with 1 to 6 carbon atoms) (1). In the heating, the aqueous sulfonylimide solution is heated at 60°C or more and 120°C or less(from 60°C to 120°C inclusive). In the heating, the aqueous sulfonylimide solution may be heated at 30 kPa or less. The aqueous sulfonylimide solution after the heating may contain FSO₃Li at a concentration of 1500 ppm by mass or less with respect to the sulfonylimide compound represented by the general formula (1).

The present disclosure is directed to a method for producing a non-aqueous electrolyte solution containing a sulfonylimide compound represented by the general formula (1) as an electrolyte and an electrolyte solution solvent, wherein the electrolyte solution solvent is added to the aqueous sulfonylimide solution purified by the above-described purification method to dehydrate the aqueous sulfonylimide solution. The electrolyte solution solvent may be a carbonate solvent. The non-aqueous electrolyte solution may contain FSO₃Li at a concentration of 100 ppm by mass or less with respect to the electrolyte.

The present disclosure is directed to a method for producing an electrolyte composition containing the sulfonylimide compound represented by the general formula (1) as an electrolyte. The method includes distilling off the electrolyte solution solvent from the non-aqueous electrolyte solution obtained by the production method. The electrolyte composition contains FSO₃Li at a concentration of 100 ppm by mass or less with respect to the electrolyte.

### ADVANTAGES OF THE INVENTION

The present disclosure can provide a purification method for reducing the concentration of FSO₃Li in an aqueous sulfonylimide solution containing a sulfonylimide compound, a method for producing a non-aqueous electrolyte solution using the aqueous sulfonylimide solution purified by the purification method, and a method for producing an electrolyte composition using the non-aqueous electrolyte solution obtained by the production method.

### BRIEF DESCRIPTION OF THE DRAWING

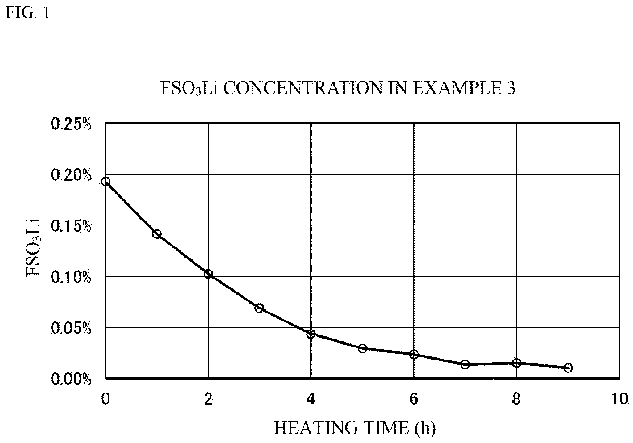

FIG. 1 is a graph showing changes in FSO₃Li concentration in an aqueous LiFSI solution obtained in Example 3.

### DESCRIPTION OF EMBODIMENTS

Embodiments will be described in detail below. The following description of preferred embodiments is merely an example in nature and is not intended to limit the scope, applications, or use of the present disclosure.

### <Method for Purifying Aqueous Sulfonylimide Solution>

An object of the method for purifying an aqueous sulfonylimide solution of the present embodiment is to reduce the concentration of FSO₃Li in an aqueous sulfonylimide solution containing a specific sulfonylimide compound described later. Reducing the concentration of FSO₃Li in the aqueous sulfonylimide solution reduces the generation of impurities (decomposition product of FSO₃Li) that promote the decomposition of the sulfonylimide compound such as SO₄²⁻. This can consequently reduce the deterioration of the aqueous sulfonylimide solution. The aqueous sulfonylimide solution purified by this purification method has reduced the amount of the impurities, improving in storage stability (being capable of reducing a decomposition reaction of the sulfonylimide compound even after long term storage). Thus, the aqueous sulfonylimide solution can be suitably used as a raw material of a non-aqueous electrolyte solution (an electrolyte solution or an electrolyte solution material).

### (Heating)

The method for purifying the aqueous sulfonylimide solution includes heating of the aqueous sulfonylimide solution. Specifically, the heating is carried out after the preparing of the aqueous sulfonylimide solution. Thus, one of the features of the purification method is that the heating is performed after the preparing. When the aqueous sulfonylimide solution is heated, impurities in the aqueous sulfonylimide solution (especially FSO₃Li) are sufficiently reduced.

The aqueous sulfonylimide solution may be heated by any method, and any known method can be employed. For example, a container with an aqueous sulfonylimide solution may be heated with the solution being stirred (heating and stirring method). Specifically, a container such as a flask or a test tube with the aqueous sulfonylimide solution is immersed in an oil bath, and the temperature of the oil bath is raised with the solution being stirred to raise the internal temperature of the container (corresponding to a heating temperature described later).

The heating can be performed either under normal pressure or reduced pressure (or under normal pressure and reduced pressure combined during the heating). When the heating is performed under reduced pressure, the degree of decompression is not limited to a particular value and may be appropriately controlled according to the concentration of the sulfonylimide compound and the types and amounts of an anionic component and an additive described later. For example, the pressure is preferably reduced to 100 kPa or less, more preferably 60 kPa or less, yet more preferably 30 kPa or less, particularly preferably 15 kPa or less. The lower limit of the degree of decompression is more than 10 kPa. The degree of decompression may be constant during the heating or may be changed within the above range.

The higher the heating temperature during the heating is, the higher the reduction rate of the FSO₃Li concentration in the aqueous sulfonylimide can be, improving the storage stabilities of the aqueous sulfonylimide solution and a non-aqueous electrolyte solution prepared using the aqueous sulfonylimide solution. From this viewpoint, the heating temperature is 60°C or higher, more preferably 70°C or higher, yet more preferably 80°C or higher, still more preferably 90°C or higher. The upper limit of the heating temperature is 120°C or less in view of reducing thermal degradation of the aqueous sulfonylimide solution caused by thermal decomposition of the sulfonylimide compound.

Time taken by the heating may be appropriately determined according to the concentration of the sulfonylimide compound in the aqueous sulfonylimide solution. The longer the heating time is, the higher the reduction rate of the FSO₃Li concentration in the aqueous sulfonylimide solution can be. The heating time is, 3 hours or more, 5 hours or more, or 6 hours or more. The upper limit of the heating time is 24 hours or less in view of the productivity of the aqueous sulfonylimide solution.

The concentration of FSO₃Li in the aqueous sulfonylimide solution after the heating is preferably 1500 ppm by mass (0.15 mass%) or less, more preferably 1000 ppm by mass (0.10 mass%) or less, yet more preferably 500 ppm by mass (0.05 mass%) or less, still more preferably 300 ppm by mass (0.03 mass%) or less, even more preferably 100 ppm by mass (0.01 mass%) or less, particularly preferably 50 ppm by mass (0.005 mass%) or less, with respect to a sulfonylimide compound (1) described later in view of improved storage stabilities of the aqueous sulfonylimide solution and the non-aqueous electrolyte solution prepared using the aqueous sulfonylimide solution. The FSO₃Li concentration is preferably as low as possible, and may be equal to or lower than the detection limit or substantially none (0 mass ppm). The FSO₃Li concentration can be measured by a method described in Examples below, for example, by ion chromatography.

The reduction rate of the FSO₃Li concentration in the aqueous sulfonylimide solution before and after the heating (before and after the heating treatment) is preferably as high as possible in view of improving the storage stabilities of the aqueous sulfonylimide solution and the non-aqueous electrolyte solution prepared using the aqueous sulfonylimide solution. For example, the reduction rate is preferably 50% or more, more preferably 60% or more. The reduction rate can be calculated by, for example, the following mathematical equation (1).
[Mathematical 1] Reduction rate of FSO3Li concentration in aqueous sulfonylimide solution before and after heating = [{(FSO3Li concentration in aqueous sulfonylimide solution before heating) - (FSO3Li concentration in aqueous sulfonylimide solution after heating)}/(FSO3Li concentration in aqueous sulfonylimide solution before heating)] × 100 (1)

### (Preparing)

The method for purifying an aqueous sulfonylimide solution may include preparing performed before the heating or another process, for example, one process of a method for producing an aqueous sulfonylimide solution. Thus, the method for purifying the aqueous sulfonylimide solution can also be a method for producing an aqueous sulfonylimide solution because a high-purity aqueous sulfonylimide solution is obtained. The preparing is preparing of an aqueous sulfonylimide solution containing a compound represented by the general formula (1):
[Chemical 1]

LiN(RSO₂)(FSO₂) (1)

(hereinafter referred to as a "sulfonylimide compound (1)", a fluorine-containing sulfonylimide salt).

In the general formula (1), R represents a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among the alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group with 1 to 6 carbon atoms include one obtained by substituting some or all of hydrogen atoms contained in an alkyl group having 1 to 6 carbon atoms with fluorine atoms. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. In particular, the fluoroalkyl group may be a perfluoroalkyl group.

As the substituent R, a fluorine atom and a perfluoroalkyl group (e.g., a perfluoroalkyl group with 1 to 6 carbon atoms, such as a trifluoromethyl group, a pentafluoroethyl group, and a heptafluoropropyl group) are preferable. Among them, the fluorine atom, the trifluoromethyl group, and the pentafluoroethyl group are more preferable, the fluorine atom and the trifluoromethyl group are yet more preferable, and the fluorine atom is still more preferable.

Specific examples of the sulfonylimide compound (1) include lithium bis(fluorosulfonyl)imide (LiN(FSO₂)₂, LiFSI), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, and lithium (fluorosulfonyl)(heptafluoropropylsulfonyl)imide. These sulfonylimide compounds may be used alone or in combination of two or more.

Among the examples of the sulfonylimide compound (1), lithium bis(fluorosulfonyl)imide, lithium (fluorosulfonyl)(trifluoromethylsulfonyl)imide, and lithium(fluorosulfonyl)(pentafluoroethylsulfonyl)imide are preferable, and lithium bis(fluorosulfonyl)imide is more preferable, in view of sufficiently reducing FSO₃Li in the aqueous sulfonylimide solution. In other words, the sulfonylimide compound (1) in the aqueous sulfonylimide solution preferably contains LiN(FSO₂)₂.

As the sulfonylimide compound (1), a commercially available product may be used, or one synthesized by any known method may also be used. A method for synthesizing the sulfonylimide compound (1) is not particularly limited, and all known methods can be adopted. Examples of the method include methods described in International publication WO 2011/149095, Japanese Unexamined Patent Publication Nos. 2014-201453, 2010-168249, 2010-168308, and 2010-189372, International publication WO 2011/065502, Japanese Patent Application Publication No. 8-511274, International publications WO 2012/108284, WO 2012/117961, and WO 2012/118063, Japanese Unexamined Patent Publication Nos. 2010-280586, 2010-254543, and 2007-182410, and International publication WO 2010/010613. By the known method, powder (solid) of the sulfonylimide compound (1) is obtained.

The content of the sulfonylimide compound (1) in the aqueous sulfonylimide solution (the total content when two or more compounds are used together) is preferably 40 mass% or more, more preferably 45 mass% or more, yet more preferably 50 mass% or more, in view of sufficiently reducing FSO₃Li. The upper limit of the content is preferably 80 mass% or less in view of sufficiently reducing FSO₃Li.

The sulfonylimide compound (1) (aqueous sulfonylimide solution) may contain a production solvent used to produce the sulfonylimide compound (1) (a solvent remaining in the sulfonylimide compound (1) obtained by the known method) within a range where the object of the present invention is not impaired. The remaining solvent refers to, for example, a solvent used in a reaction for production of the sulfonylimide compound (1) and a solvent used in purification. Examples of such solvents include: water; alcohol solvents such as methanol, ethanol, propanol, and butanol; carboxylic acid solvents such as formic acid and acetic acid; ketone solvents such as acetone, methyl ethyl ketone, methyl isobutyl ketone, and diisobutyl ketone; nitrile solvents such as isobutyronitrile, acetonitrile, valeronitrile, and benzonitrile; ester solvents such as ethyl acetate, isopropyl acetate, and butyl acetate; aliphatic ether solvents such as diethyl ether, diisopropyl ether, t-butyl methyl ether, and cyclopentyl methyl ether; halogen solvents such as HF; nitro group-containing solvents such as nitromethane and nitrobenzene; nitrogen-containing organic solvents such as ethyl formamide and N-methylpyrrolidone; dimethyl sulfoxide; glyme solvents; aromatic hydrocarbon solvents such as toluene, o-xylene, m-xylene, p-xylene, benzene, ethylbenzene, isopropylbenzene, 1,2,3-trimethylbenzene, 1,2,4-trimethylbenzene, 1,3,5-trimethylbenzene, tetralin, cymene, methylethylbenzene, 2-ethyltoluene, chlorobenzene, and dichlorobenzene; chain aliphatic hydrocarbon solvents such as pentane, hexane, heptane, octane, decane, dodecane, undecane, tridecane, decalin, 2,2,4,6,6-pentamethylheptane, isoparaffin (e.g., "MARUKASOL R" (2,2,4,6,6-pentamethylheptane, a mixture of 2,2,4,6,6-pentamethylheptane, manufactured by Maruzen Petrochemical Co., Ltd.)), "ISOPAR (registered trademark) G" (C9-C11 isoparaffin manufactured by Exxon Mobil Corporation), "ISOPAR (registered trademark) E" (C8-C10 isoparaffin manufactured by Exxon Mobil Corporation), dichloromethane, chloroform, and 1,2-dichloroethane; cyclic aliphatic hydrocarbon solvents such as cyclohexane, methylcyclohexane, 1,2-dimethylcyclohexane, 1,3-dimethylcyclohexane, 1,4-dimethylcyclohexane, ethylcyclohexane, 1,2,4-trimethylcyclohexane, 1,3,5-trimethylcyclohexane, propylcyclohexane, butylcyclohexane, and "SWACLEAN 150" (a mixture of C9 alkylcyclohexane manufactured by Maruzen Petrochemical Co., Ltd.); aromatic ether solvents such as anisole, 2-methylanisole, 3-methylanisole, and 4-methylanisole; carbonate solvents such as ethylene carbonate, propylene carbonate, butylene carbonate, dimethyl carbonate, ethyl methyl carbonate, and diethyl carbonate; chain ether solvents such as dimethoxymethane and 1,2-dimethoxyethane; cyclic ether solvents such as tetrahydrofuran, 2-methyltetrahydrofuran, 1,3-dioxane, and 4-methyl-1,3-dioxolane; cyclic ester solvents such as γ-butyrolactone and γ-valerolactone; sulfolane solvents such as sulfolane and 3-methylsulfolane; N,N-dimethylformamide; dimethyl sulfoxide; and N-methyloxazolidinone.

In other words, the aqueous sulfonylimide solution may contain a non-aqueous solvent such as the remaining solvent described above as long as the object of the present invention is not impaired. In addition, in the preparing (before the heating), a non-aqueous solvent such as an electrolyte solution solvent described later may be added to the aqueous sulfonylimide solution as long as the object of the present invention is not impaired. As the non-aqueous solvent to be added, chain carbonate ester (chain carbonate) solvents, ether solvents, chain ester solvents, and nitrile solvents are preferable, dimethyl carbonate, ethyl methyl carbonate, diethyl carbonate, ethylene glycol dimethyl ether, ethylene glycol diethyl ether, tetrahydrofuran, 2-methyltetrahydrofuran, ethyl acetate, butyl acetate, propyl propionate, acetonitrile, propionitrile, valeronitrile, butyronitrile, and isobutyronitrile are more preferable, and chain carbonate solvents such as dimethyl carbonate, ethyl methyl carbonate, and diethyl carbonate are yet more preferable.

The aqueous sulfonylimide solution may contain an additive described later as long as the object of the present invention is not impaired. The additive may be added to the aqueous sulfonylimide solution in the preparing.

The aqueous sulfonylimide solution contains of an anionic component as long as the object of the present invention is not impaired. In other words, the anionic component is added to the aqueous sulfonylimide solution in the preparing. When the aqueous sulfonylimide solution is prepared, a small amount of fluorosulfonic acid (HFSO₃) is generated due to moisture in the aqueous solution and heat generation during dissolution. Depending on the production method of the sulfonylimide compound (1), the obtained sulfonylimide compound (1) may contain HFSO₃. HFSO₃ may cause the deterioration of the aqueous sulfonylimide solution due to the decomposition of the sulfonylimide compound (1) as FSO₃Li does, and thus, it is desirable to capture (trap) HFSO₃ in the aqueous sulfonylimide solution with the anionic component.

The anionic component contains an acid component having an acid dissociation constant pKa (a first-step acid dissociation constant pKa1 for acids that ionize multiple times) of 0 or more and 6.5 or less (temperature: room temperature (25°C), solvent: water). Hereinafter, this acid component is also referred to as a "specific acid component."

In the present specification, the anionic component refers to a partial structure of a specific acid component such as a specific acid that can be an anion by ion dissociation in a solution or a salt thereof, for example, an amide sulfate ion in amide sulfate described later or lithium amide sulfate described later.

The specific acid component has higher pKa (pKa1) than a sulfuric acid (pKa1 = -3) component generated by the decomposition of the sulfonylimide compound (1). Examples of the specific acid component include an amidosulfuric acid (pKa = 1) component, an acetic acid (pKa = 4.8) component, a carbonic acid (pKa1 = 6.1) component, and a phosphoric acid (pKa1 = 1.8) component. The specific acid components may be used (contained) alone, or two or more of them may be used together (may contained in combination). Specifically, the specific acid component (anionic component) is at least one selected from the group consisting of an amidosulfuric acid component, an acetic acid component, a carbonic acid component, and a phosphoric acid component. The specific acid component may have any structure in the solution and may be present (contained) in an ionic form (undissolved) or dissolved.

Examples of the amidosulfuric acid component (an amidosulfuric acid compound, an amidosulfuric acid-based compound, and amidosulfuric acids) include amidosulfuric acid (sulfamic acid), amidosulfuric acid derivatives, and salts thereof.

The amidosulfuric acid component may have any structure, for example, a neutral structure (H₂NSO₂(OH), HN=SO(OH)₂), a zwitterion structure (H₃N⁺SO₃⁻, H₂N⁺=SO(OH)O⁻), or a structure containing both of them.

Examples of the amidosulfuric acid derivatives include N-substituted amidosulfuric acid (N-substituted sulfamic acid).

The amidosulfuric acid derivatives (and salts thereof) may be compounds represented by the general formula (2) (N-substituted amidosulfuric acid and salts thereof). Although the general formula (2) represents a compound having a neutral structure (R¹R²NSO₂(OM)), the compound may have a zwitterion structure or a structure including both of them.

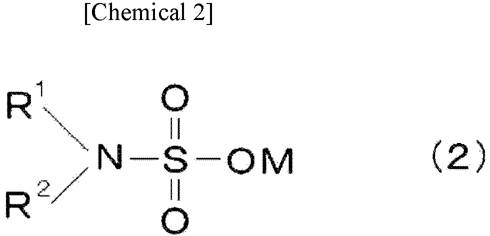

In the general formula (2), R¹ and R² each represent H (hydrogen atom), a hydroxyl group, or an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and R¹ and R² may each contain a heteroatom and form a ring structure. R¹ and R² may be identical to or different from each other when representing the group other than H (when either one of R¹ or R² is H, R¹ and R² are not identical to each other (R¹ and R² do not simultaneously represent H)). M represents H (hydrogen atom) or a metal atom.

In the general formula (2), examples of the alkyl group with 1 to 10 carbon atoms include a methyl group. Examples of the cycloalkyl group with 3 to 10 carbon atoms include a cyclopropyl group. Examples of the aryl group with 6 to 16 carbon atoms include a phenyl group and a naphthyl group. Examples of the aralkyl group with 7 to 16 carbon atoms include a benzyl group and a phenethyl group. Examples of the alkanoyl group with 2 to 16 carbon atoms include a benzoyl group.

These groups may each contain a heteroatom (e.g., a nitrogen atom, an oxygen atom, a sulfur atom, and a phosphorus atom). Examples of such a group include a group in which some of the carbon atoms are substituted with a hetero atom, and thiocycloalkyl group (a group corresponding to thiocycloalkane such as thiepane, thiocane, thietane, thiane, and dithiane).

In addition, examples of the substituent with which these groups are substituted include, but are not particularly limited to, a hydroxyl group, a halogen atom, an amino group, a carboxyl group, an alkoxy group, and an acyl group. These substituents may be used alone or in combination of two or more of them.

Examples of the metal atom include alkali metal atoms such as lithium, sodium, and potassium, and alkali earth metal atoms such as magnesium, calcium, and barium, and aluminum.

Specific examples of the amidosulfuric acid derivative and the salt thereof [N-substituted amidosulfuric acid and a salt thereof (or the compound represented by the formula (2))] include: N-hydroxyamidosulfuric acid; N-mono- or di-alkyl amidosulfuric acid [N-methylamidosulfuric acid, N-ethylamidosulfuric acid, N-(1-methylpropyl)amidosulfuric acid, N-(2-methylbutyl)amidosulfuric acid, N-(2,2-dimethylpropyl)amidosulfuric acid, N,N-diethylamidosulfuric acid, N-(3-hydroxypropyl)amidosulfuric acid, N-methyl-N-(2,3-dihydroxypropyl)amidosulfuric acid, N,N-bis(2-hydroxyethyl)amidosulfuric acid, N-(2,3-dihydroxypropyl)amidosulfuric acid, N-(3-methoxy-4-methylphenyl)amidosulfuric acid, N-methyl-N-(2-hydroxy-3-chloropropyl)amidosulfuric acid, N-(2-hydroxy-3-chloropropyl)amidosulfuric acid, N-ethyl-N-(2-hydroxy-3-chloropropyl)amidosulfuric acid, or the like]; N-mono- or di-cycloalkyl amidosulfuric acid (N-cyclohexylamidosulfuric acid, N,N-dicyclohexylamidosulfuric acid, or the like); N-mono- or di-aryl amidosulfuric acid [N-phenylamidosulfuric acid, N-naphthylamidosulfuric acid, N-hydroxy-N-(2-hydroxy-1-naphthyl)amidosulfuric acid, N-(4-bromophenyl)amidosulfuric acid, or the like]; N-mono- or di-aralkyl amidosulfuric acid [N-benzylamidosulfuric acid, N-(β-methylphenethyl)amidosulfuric acid, or the like]; N-alkyl-N-arylamidosulfuric acid (N-ethyl-N-phenylamidosulfuric acid, or the like), N-mono- or di-acyl amidosulfuric acid [N-benzoylamidosulfuric acid, N-(3-chloroalanyl)amidosulfuric acid, N-(3-chloro-3-methylalanyl)amidosulfuric acid, or the like]; and N-thiocycloalkylamidosulfuric acid [N-(thiepane-4-yl)amidosulfuric acid, N-thiocane-4-ylamidosulfuric acid, thiocane-5-ylamidosulfuric acid, N-thietane-3-ylamidosulfuric acid, N-1,3-dithiane-5-ylamidosulfuric acid, N-(thiane-3-yl)amidosulfuric acid, N-(thiolane-3-yl)amidosulfuric acid, or the like], and salts thereof. These amidosulfuric acid derivatives and salts thereof may be used alone or in combination of two or more of them.

The salt of the amidosulfuric acid component is not particularly limited and may be, for example, a salt containing amidosulfuric acid or an amidosulfuric acid derivative as either a base or an acid, and may usually be a salt containing amidosulfuric acid or an amidosulfuric acid derivative as an acid (a salt of amidosulfuric acid or amidosulfuric acid derivative with a base).

Specific examples of the salt include: alkali metal salts such as lithium salts, sodium salts, and potassium salts; alkali earth metal salts such as magnesium salts calcium salts, and barium salts; and metal salts such as aluminum salts. Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (such as lithium amidosulfate) may be used.

The amidosulfuric acid component preferably contains at least one selected from the group consisting of amidosulfuric acid and salts thereof (alkali metal salts) and amidosulfuric acid derivatives and salts thereof (alkali metal salts), more preferably contains at least one selected from the group consisting of amidosulfuric acid and alkali metal salts of amidosulfuric acid (e.g., lithium amidosulfate), and yet more preferably contains the alkali metal salt of amidosulfuric acid.

Carboxylic acid as a typical acetic acid component and salts thereof may be compounds represented by the general formula (3):
[Chemical 3]

R³COOM (3)

In the general formula (3), R³ represents H (hydrogen atom), or an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and may contain a heteroatom, and M is the same as defined above.

In the general formula (3), examples of the alkyl group with 1 to 10 carbon atoms include a methyl group. Examples of the cycloalkyl group with 3 to 10 carbon atoms include a cyclopropyl group. Examples of the aryl group with 6 to 16 carbon atoms include a phenyl group and a naphthyl group. Examples of the aralkyl group with 7 to 16 carbon atoms include a benzyl group and a phenethyl group. Examples of the alkanoyl group with 2 to 16 carbon atoms include a benzoyl group.

These groups may each contain a heteroatom (e.g., a nitrogen atom, an oxygen atom, a sulfur atom, and a phosphorus atom). Examples of such a group include a group in which some of the carbon atoms are substituted with a hetero atom, and thiocycloalkyl group (a group corresponding to thiocycloalkane such as thiepane, thiocane, thietane, thiane, and dithiane).

In addition, examples of the substituent with which these groups are substituted include, but are not particularly limited to, a hydroxyl group, a halogen atom, an amino group, a carboxyl group, an alkoxy group, and an acyl group. These substituents may be used alone or in combination of two or more of them.

Specific examples of carboxylic acid and salts thereof (or the compound represented by the general formula (3)) include saturated fatty acids (such as formic acid, acetic acid, propionic acid, and butyric acid), unsaturated fatty acids (such as linolenic acid, linoleic acid, and oleic acid), hydroxy acids (such as lactic acid, citric acid, and salicylic acid), dicarboxylic acids (such as oxalic acid, tartaric acid, phthalic acid, itaconic acid, and maleic acid), amino acids (such as glycine and alanine), and salts thereof. These carboxylic acids and the salts thereof may be used alone or in combination of two or more.

Specific examples of the salts include alkali metal salts (lithium salts, sodium salts, and potassium salts), alkali earth metal salts (magnesium salts, calcium salts, and barium salts), and aluminum salts. Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (e.g., lithium acetate) may be used.

The carbonic acid component is not limited to a particular component, and examples thereof include carbonate and bicarbonate. The carbonic acid components may be used alone or in combination of two or more of them.

Specific examples of the salt include alkali metal salts (lithium salts, sodium salts, potassium salts, rubidium salts, and cesium salts) and alkali earth metal salts (beryllium salts, magnesium salts, calcium salts, strontium salts, and barium salts). Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (e.g., lithium carbonate) may be used.

The phosphoric acid component is not limited to a particular component, and examples thereof include phosphate, hydrogen phosphate, and dihydrogen phosphate. The phosphoric acid components may be used alone or in combination of two or more.

Specific examples of the salt include alkali metal salts (lithium salts, sodium salts, potassium salts, rubidium salts, and cesium salts) and alkali earth metal salts (beryllium salts, magnesium salts, calcium salts, strontium salts, and barium salts). Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (e.g., lithium phosphate) may be used.

The amount of the anionic component added to the aqueous sulfonylimide solution may be appropriately determined according to the concentration of the sulfonylimide compound (1), but is preferably 0.1 mass% or more, more preferably 0.2 mass% or more, yet more preferably 0.3 mass% or more in 100 mass% of the aqueous sulfonylimide solution in view of reliably trapping HFSO₃. The upper limit of the addition amount is preferably 1 mass% or less, more preferably 0.8 mass% or less, yet more preferably 0.5 mass% or less, with respect to 100 mass% of the aqueous sulfonylimide solution, in view of reducing the amount of insoluble particles of the anionic component remaining in the aqueous sulfonylimide solution.

When the specific acid component is a salt (a salt of an acid or a derivative thereof), the addition amount may be a ratio in terms of a non-salt form (or a free form, e.g., an acid or an acid derivative). The salts of the above-described acids and derivatives thereof may be commercially available products or manufactured products.

The aqueous sulfonylimide solution may be prepared by any method. Examples of the method include: a method of dissolving powder (solid) of the sulfonylimide compound (1) in water; and a method of mixing water, a lithium salt such as LiOH and Li₂CO₃, and HFSI [bis(fluorosulfonyl)imide] for reaction with each other (preparation of an aqueous LiFSI solution). If necessary, the above-described non-aqueous electrolyte solution, additive, and anionic component may be added to the obtained aqueous sulfonylimide solution.

### (Other Processes)

The method for purifying the aqueous sulfonylimide solution may include other processes as long as the object of the present invention is not impaired. Examples of the other processes include filtration, column chromatography, treatment with activated carbon, and treatment with a molecular sieve.

### <Method for Producing Non-Aqueous Electrolyte Solution>

The method for producing a non-aqueous electrolyte solution of the present disclosure is a method for producing a non-aqueous electrolyte solution containing a sulfonylimide compound (1) as an electrolyte and an electrolyte solution solvent. This production method assumes that the aqueous sulfonylimide solution purified by the purification method described above is used, and includes dehydrating the aqueous solution by adding an electrolyte solution solvent to the aqueous solution (the dehydrating described later). The method for purifying the aqueous sulfonylimide solution described above may be included as one of the processes of the method for producing the non-aqueous electrolyte solution by using the purified aqueous sulfonylimide solution as a raw material. Specifically, it can be said that the method for producing the non-aqueous electrolyte solution includes preparing an aqueous sulfonylimide solution, heating the aqueous sulfonylimide solution obtained in the preparing, and dehydrating the aqueous sulfonylimide solution after the heating to replace water with an electrolyte solution solvent. It should be noted that all the matters described in terms of the method for purifying the aqueous sulfonylimide solution are also applied to the method for producing the non-aqueous electrolyte solution.

### (Dehydrating)

In the dehydrating, an electrolyte solution solvent described later is added to the aqueous sulfonylimide solution after the heating (the aqueous sulfonylimide solution purified by the above-described purification method) to dehydrate the aqueous sulfonylimide solution by azeotropic distillation of water and the added electrolyte solution solvent for replacement of water with the added electrolyte solution solvent.

The aqueous sulfonylimide solution may be dehydrated by any method, for example, by a method of dehydrating a solution obtained by adding a non-aqueous solvent such as an electrolyte solution solvent to the aqueous sulfonylimide solution (a solution used for dehydration and replacement with the non-aqueous solvent, hereinafter also referred to as a "water-containing sulfonylimide solution for dehydration").

For example, the non-aqueous solvent may be continuously added in the same amount as a portion to be removed of a distillate generated by azeotropic distillation of water in the water-containing sulfonylimide solution for dehydration and the non-aqueous solvent added, or the distillate may be phase-separated to remove an aqueous phase and reflux an organic phase (a phase containing the non-aqueous solvent). This process dehydrates the water-containing sulfonylimide solution for dehydration to obtain a sulfonylimide solution containing the added non-aqueous solvent. The sulfonylimide solution contains the electrolyte (the sulfonylimide compound (1)) and the electrolyte solution solvent, and thus, can be directly used as a non-aqueous electrolyte solution or as a raw material of the non-aqueous electrolyte solution (an electrolyte solution or an electrolyte solution material). Thus, the dehydrating can be said to be replacing water in the aqueous sulfonylimide solution with the non-aqueous solvent.

The amount of the electrolyte solution solvent added (used) has no lower limit and may be appropriately controlled according to the type and amount of the remaining solvent in the sulfonylimide compound (1). For example, the amount is preferably 10000 g or less, more preferably 1000 g or less, yet more preferably 500 g or less, still more preferably 200 g or less, with respect to 100 g of the sulfonylimide compound (1).

The amount of the electrolyte solution solvent added (used) is, for example, preferably 1 part by mass to 1000 parts by mass, more preferably 5 parts by mass to 500 parts by mass, yet more preferably 10 parts by mass to 300 parts by mass, still more preferably 30 parts by mass to 200 parts by mass, with respect to 100 parts by mass of the sulfonylimide compound (1).

The dehydrating can be performed either under normal pressure or reduced pressure (or under normal pressure and reduced pressure combined during the dehydrating). However, the dehydrating is preferably performed under reduced pressure in view of reducing thermal degradation of the aqueous sulfonylimide solution by thermal decomposition of the sulfonylimide compound (1). The degree of decompression is not particularly limited and may be appropriately controlled according to the concentration of the sulfonylimide compound (1) and the type and amount of the electrolyte solution solvent added. For example, the pressure is preferably reduced to 100 kPa or less, more preferably 40 kPa or less, yet more preferably 15 kPa or less, particularly preferably 10 kPa or less.

The heating temperature during the dehydrating is not particularly limited and may be appropriately controlled according to the degree of decompression and the type and amount of the electrolyte solution solvent added. However, the temperature is preferably relatively low in view of reducing thermal degradation of the aqueous sulfonylimide solution caused by thermal decomposition of the sulfonylimide compound (1). The heating temperature is, for example, preferably 10°C to 110°C, more preferably 15°C to 90°C, yet more preferably 20°C to 80°C, particularly preferably 30°C to 70°C.

Time taken by the dehydrating is not particularly limited and may be appropriately controlled according to the degree of decompression, the heating temperature, and the type and amount of the electrolyte solution solvent added. For example, the dehydrating is preferably performed for 0.1 to 24 hours, more preferably 0.5 to 22 hours.

Any apparatus that can perform decompression and/or heating can be appropriately selected for the dehydrating according to the amount of the solution, the degree of decompression, and the heating temperature. For example, a tank reactor and a tank reactor capable of reducing the pressure can be used.

### (Other Processes)

The method for producing the non-aqueous electrolyte solution may include other processes as long as the object of the present invention is not impaired. Examples of the other processes include filtration, column chromatography, treatment with activated carbon, and treatment with a molecular sieve.

### (Electrolyte)

It is only required that the electrolyte contains the sulfonyl imide compound (1), but may also contain another electrolyte (an electrolyte other than the sulfonylimide compound (1)). The other electrolyte may be mixed with the non-aqueous electrolyte solution or may be mixed with the aqueous sulfonylimide solution in the preparing. Examples of the other electrolyte include an imide salt and a non-imide salt.

Examples of the imide salt include another fluorine-containing sulfonylimide salt (hereinafter referred to as "other sulfonylimide compound") that is different from the sulfonylimide compound (1). Examples of the other sulfonylimide compound include: lithium bis(trifluoromethylsulfonyl)imide (LiN(CF₃SO₂)₂, hereinafter also referred to as "LiTFSI"); lithium bis(pentafluoroethylsulfonyl)imide; lithium bis(heptafluoropropylsulfonyl)imide; and a non-lithium salt of fluorine-containing sulfonylimide listed above as the sulfonylimide compound (1) (e.g., a salt obtained by substituting lithium (ion) in the sulfonylimide compound (1) with a cation other than the lithium ion). Examples of the salt substituted with cations other than the lithium ions include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more. Alternatively, as the other sulfonylimide compound, a commercially available product may be used, or one obtained by synthesis using a known method may also be used.

Examples of the non-imide salt include salts of non-imide-based anions and cations (lithium ions and the cations shown above as examples). Examples of the non-imide salt include: lithium salts such as fluorophosphoric acid compounds including LiPF₆, LiPF₃(CF₃)₃, LiPF₃(C₂F₅)₃, LiPF₃(C₃F7)₃, and LiPF₃(C₄F₉)₃, fluoroboric acid compounds including LiBF₄, LiBF(CF₃)₃, LiBF(C₂F₅)₃, and LiBF(C₃F₇)₃, lithium hexafluoroarsenate (LiAsF₆), LiSbF₆, LiClO₄, LiSCN, LiAlF₄, CF₃SO₃Li, LiC[(CF₃SO₂)₃], LiN(NO₂), and LiN[(CN)₂]; and non-lithium salts such as salts obtained by substituting lithium (ions) in these lithium salts with the above-listed cations (e.g., NaBF₄, NaPF₆, and NaPF₃(CF₃)₃). These non-imide salts may be used alone or in combination of two or more of them. As the non-imide salt, a commercially available product may be used, or one synthesized by any known method may also be used.

These electrolytes (the sulfonylimide compound (1) and the other electrolytes) may be present (contained) in the ionic form in the non-aqueous electrolyte solution.

The concentration of the sulfonylimide compound (1) in the non-aqueous electrolyte solution is preferably 30 mass% or more, more preferably 35 mass% or more, yet more preferably 40 mass% or more, in view of improving stability during storage. The concentration is preferably 70 mass% or less, more preferably 60 mass% or less, yet more preferably 50 mass% or less, in view of keeping the battery performance from decreasing due to the increase in viscosity of the electrolyte solution.

### (Electrolyte Solution Solvent)

Any solvent that can dissolve and disperse the electrolyte can be used as the electrolyte solution solvent. Suitable examples of the electrolyte solution solvent include a non-aqueous solvent that has a large dielectric constant and a boiling point of 60°C or higher at normal pressure, dissolves the electrolyte salt well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ethers, triethylene glycol dimethyl ether, tetraethylene glycol dimethyl ether, 1,4-dioxane, and 1,3-dioxolane; chain carbonate ester (carbonate) solvents such as dimethyl carbonate (DMC), ethyl methyl carbonate (EMC), diethyl carbonate (DEC), diphenyl carbonate, and methylphenyl carbonate; saturated cyclic carbonate solvents such as ethylene carbonate, propylene carbonate, 2,3-dimethyl ethylene carbonate, 1,2-butylene carbonate, and erythritan carbonate; cyclic carbonate ester solvents having an unsaturated bond such as vinylene carbonate, methyl vinylene carbonate, ethyl vinylene carbonate, 2-vinyl ethylene carbonate, and phenylethylene carbonate; fluorine-containing cyclic carbonate ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as γ-butyrolactone, γ-valerolactone, and δ-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; nitromethane; 1,3-dimethyl-2-imidazolidinone; 1,3-dimethyl-3,4,5,6-tetrahydro-2(1H)-pyrimidinone; 3-methyl-2-oxazolidinone; and chain ester solvents such as ethyl acetate, butyl acetate, and propyl propionate. These solvents may be used alone or in combination of two or more of them.

Among the electrolyte solution solvents, the carbonate solvents such as the chain carbonate ester solvents and the cyclic carbonate ester solvents, the lactone solvents, the ether solvents, and the chain ester solvents are preferable, dimethyl carbonate, ethyl methyl carbonate, diethyl carbonate, ethylene carbonate, propylene carbonate, γ-butyrolactone, and γ-valerolactone are more preferable, the carbonate solvents such as dimethyl carbonate, ethyl methyl carbonate, diethyl carbonate, ethylene carbonate, and propylene carbonate are yet more preferable, and the chain carbonate solvents such as dimethyl carbonate, ethyl methyl carbonate, and diethyl carbonate are still more preferable.

### (Additive)

The non-aqueous electrolyte solution may contain an additive for improving various characteristics of the lithium ion secondary battery. The additive may be mixed with the non-aqueous electrolyte solution or may be mixed with the aqueous sulfonylimide solution in the preparing. Examples of the additive include: carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as vinylene carbonate, fluoroethylene carbonate (FEC), trifluoropropylene carbonate, phenylethylene carbonate, and erythritan carbonate; sulfamic acid (amidosulfuric acid, H₃NSO₃); sulfamate salts (alkali metal salts such as lithium salts, sodium salts, and potassium salts; alkali earth metal salts such as calcium salts, strontium salts, and barium salts; other metal salts such as manganese salts, copper salts, zinc salts, iron salts, cobalt salts, and nickel salts; ammonium salts; and guanidine salts); fluorophosphoric acid compounds such as lithium monofluorophosphate (Li₂PO₃F) and lithium difluorophosphate (LiPO₂F₂); fluoro oxalate compounds such as lithium salts having an oxalate skeleton such as lithium bis(oxalato)borate (LiBOB), lithium difluoro(oxalato)borate (LiDFOB), lithium difluoro(oxalato)phosphate (LIDFOP), lithium tetrafluoro(oxalato)phosphate (LITFOP), lithium difluorobis(oxalato)phosphate (LiDFBOP), and lithium tris(oxalato)phosphate. These additives may be used alone or in combination of two or more of them.

The additive is preferably used in a range of 0.1 mass% or more to 10 mass% or less, more preferably in a range of 0.2 mass% or more to 8 mass% or less, and much more preferably in a range of 0.3 mass% or more to 5 mass% or less, with respect to 100 mass% of the non-aqueous electrolyte solution. When the amount of the additive used is too small, it may be difficult for the additive to exhibit its effect. On the other hand, when the amount of the additive used is large, it is also difficult for the additive to exhibit its effect corresponding to the amount added, and the non-aqueous electrolyte solution may become more viscous, lowering the electrical conductivity.

The concentration of FSO₃Li in the non-aqueous electrolyte solution is preferably 100 ppm by mass (0.01 mass%) or less, more preferably 50 ppm by mass (0.005 mass%) or less, in view of improving storage stability of the non-aqueous electrolyte solution.

The non-aqueous electrolyte solution described above is used, for example, for a battery (a battery having a charge-discharge mechanism) and a power storage (electrochemical) device (or an ion conductive material constituting such a device). Specifically, the electrolyte solution can be used as an electrolyte solution constituting, for example, a primary battery, a secondary battery (e.g., a lithium (ion) secondary battery), a fuel battery, an electrolytic capacitor, an electric double layer capacitor, a solar battery, and an electrochromic display device.

### <Method for Producing Electrolyte Composition>

The method for producing an electrolyte composition of the present disclosure is a method for producing an electrolyte composition containing the sulfonylimide compound (1) as an electrolyte. This production method assumes that the non-aqueous electrolyte solution obtained by the method for producing the non-aqueous electrolyte solution described above is used, and includes distilling off the electrolyte solution solvent from the non-aqueous electrolyte solution (powdering to be described later). The method for producing the non-aqueous electrolyte solution described above may be included as one of the processes of the method for producing the electrolyte composition by using the obtained non-aqueous electrolyte solution as a raw material. Specifically, it can be said that the method for producing the electrolyte composition includes dehydrating the aqueous sulfonylimide solution after the heating to replace water with an electrolyte solution solvent and powdering. The method for purifying the aqueous sulfonylimide solution described above may also be included as one of the processes of the method for producing the electrolyte composition by using the purified aqueous sulfonylimide solution as a raw material of the non-aqueous electrolyte solution. Specifically, it can be said that the method for producing the electrolyte composition includes preparing the aqueous sulfonylimide solution, heating the aqueous sulfonylimide solution obtained in the preparing, dehydrating the solution, and powdering the dehydrated solution. It should be noted that all the matters described in terms of the method for purifying the aqueous sulfonylimide solution and the method for producing the non-aqueous electrolyte solution are also applied to the method for producing the electrolyte composition.

### (Powdering)

The powdering is distilling off the electrolyte solution solvent from the non-aqueous electrolyte solution after the dehydrating to obtain an electrolyte composition. That is, a powder (solid) electrolyte composition is obtained. The non-aqueous electrolyte solution may be powdered by any method. For example, when the solution contains hydrogen fluoride, the solution may be powdered by a method of distilling hydrogen fluoride off at a temperature equal to or higher than the melting point of the sulfonylimide compound (1) and cooling the solution to the melting point or lower for powdering, by a method of powdering the solution at a temperature equal to or lower than the melting point of the sulfonylimide compound (1) and then distilling hydrogen fluoride off, or by a combination of these methods. A method similar to the drying and powdering described in International publication WO 2011/149095 can also be employed.

### (Other Processes)

The method for producing the electrolyte composition may include other processes as long as the object of the present invention is not impaired. Examples of the other processes include filtration, column chromatography, treatment with activated carbon, and treatment with a molecular sieve.

The concentration of FSO₃Li in the electrolyte composition obtained after the powering is preferably 100 ppm by mass (0.01 mass%) or less, more preferably 50 ppm by mass (0.005mass%) or less, in view of improving storage stability of the electrolyte composition.

### <Effects>

The method for purifying the aqueous sulfonylimide solution, method for producing the non-aqueous electrolyte solution, and method for producing the electrolyte composition of the present embodiment can provide the following effects.
- The method for purifying the aqueous sulfonylimide solution is a method for purifying an aqueous sulfonylimide solution containing the sulfonylimide compound (1), and FSO₃Li in the aqueous sulfonylimide solution is sufficiently reduced by heating the aqueous sulfonylimide solution.
- The method for producing the non-aqueous electrolyte solution is a method for producing a non-aqueous electrolyte solution using the aqueous sulfonylimide solution as a raw material, and can produce a high-purity non-aqueous electrolyte solution with impurities such as FSO₃Li sufficiently reduced by adding the electrolyte solution solvent to the solution for dehydration. Even after long term storage at high temperature (e.g., for three to four months at 40°C), the sulfonylimide compound (1) is kept from decomposing, and the non-aqueous electrolyte solution is kept from deteriorating. In other words, a non-aqueous electrolyte solution with excellent storage stability is obtained.
- The method for producing the electrolyte composition is a method for producing an electrolyte composition using the non-aqueous electrolyte solution, and a powder (solid) electrolyte composition is obtained by distilling off the electrolyte solution solvent from the non-aqueous electrolyte solution. Powdering the non-aqueous electrolyte solution improves the storage stability and allows easy distribution of the product.

### EXAMPLES

The present disclosure will be described below by way of examples. The present disclosure is not limited to the following Examples. The following Examples can be modified and changed and are not excluded from the scope of the present disclosure. Hereby only Example 2, 3, 6, 8, 9, 10 and 11 form part of the current invention. Examples 1, 4, 5 and 7 do not form part of the current invention.

### <Example 1>

To an eggplant flask containing a stir bar, 50.5 g of an aqueous LiFSI solution (LiFSI/H₂O) containing 50.0 mass% lithium bis(fluorosulfonyl)imide (LiFSI, Mw: 187.06) was added. The eggplant flask was immersed in an oil bath set at 60°C, and the solution was heated under normal pressure while being stirred for 15 hours (heating, the same applies hereinafter) to obtain an aqueous LiFSI solution.

### <Example 2>

To an eggplant flask containing a stir bar, 50.58 g of an aqueous LiFSI solution (LiFSI/H₂O) containing 50.0 mass% LiFSI and 0.24 g of lithium amidosulfate (H₂NSO₃Li) were added. The eggplant flask was immersed in an oil bath set at 90°C, and the solution was heated under normal pressure while being stirred for nine hours to obtain an aqueous LiFSI solution.

### <Example 3>

To a 200 mL eggplant flask containing a stir bar, 50.56 g of an aqueous LiFSI solution (LiFSI/H₂O) containing 50.0 mass% LiFSI, 0.12 g of H₂NSO₃Li, and 0.16 g of lithium carbonate (Li₂CO₃) were added. The eggplant flask was immersed in an oil bath set at 90°C, and the solution was heated under normal pressure while being stirred for nine hours to obtain an aqueous LiFSI solution.

### <Example 4>

To a 200 mL eggplant flask containing a stir bar, 50.21 g of an aqueous LiFSI solution (LiFSI/H₂O) containing 70.0 mass% of LiFSI was added. The eggplant flask was immersed in an oil bath set at 90°C, and the solution was heated under normal pressure while being stirred for nine hours to obtain an aqueous LiFSI solution.

### <Example 5>

To a 200 mL eggplant flask containing a stir bar, 22.73 g of an aqueous LiFSI solution (LiFSI/H₂O) containing 70.0 mass% LiFSI and 25.17 g of dimethyl carbonate (DMC, Mw: 90.08) were added. The eggplant flask was immersed in an oil bath set at 90°C, and the solution was heated under normal pressure while being stirred for nine hours to obtain an aqueous LiFSI solution.

### <Example 6>

To a 200 mL eggplant flask containing a stir bar, 22.11 g of an aqueous LiFSI solution (LiFSI/H₂O) containing 70.0 mass% LiFSI, 0.10 g of H₂NSO₃Li, and 24.32 g of ethyl methyl carbonate (EMC) were added. The eggplant flask was immersed in an oil bath set at 60°C, and the solution was heated under normal pressure while being stirred for 15 hours to obtain an aqueous LiFSI solution.

### <Example 7>

To a 200 mL eggplant flask containing a stir bar, 50.26 g of an aqueous LiFSI solution (LiFSI/H₂O) containing 50.0 mass% LiFSI and 16.43 g of DMC were added. The eggplant flask was immersed in an oil bath set at 70°C, and the solution was heated under a pressure reduced to 15 kPa while being stirred for 23 hours to obtain an aqueous LiFSI solution.

### [Evaluation of Aqueous LiFSI Solution]

Table 1 shows the amounts of the components charged and the conditions for heating the prepared aqueous LiFSI solution of each Example. The concentration of FSO₃Li in each of the aqueous LiFSI solutions obtained in Examples with respect to the sulfonylimide compound (LiFSI) before and after the heating was measured by the following method. Table 1 and FIG. 1 show the results. In Table 1, "%" in the column of "LiFSI/H₂O" means "mass%." The reduction rate (%) of the FSO₃Li concentration in Table 1 is a value calculated by the above-described mathematical equation (1).

### [Concentration of FSO₃Li]

The concentration of FSO₃Li in the aqueous LiFSI solution was measured by ion chromatography. Specifically, each of the aqueous LiFSI solutions was diluted 100-fold with ultrapure water (more than 18.2 Ω·cm) to prepare a measurement solution, and the concentration of FSO₃Li contained in the aqueous LiFSI solution was measured using an ion chromatography system ICS-3000 (manufactured by Nippon Dionex K. K.). The measurement was performed under the following conditions.

### (Conditions of Measurement by Ion Chromatography)

- Separation mode: Ion exchange
- Eluent: 7 mM to 18 mM aqueous KOH solution
- Detector: Electrical conductivity detector
- Column: Anion analysis column Ion PAC AS-17C (manufactured by Nippon Dionex K. K.)

**[Table 1]**

| | Amount of components charged (g) | | | | | Heating (Heating Conditions) | | | Concentration of LiFSI [mass%] | | FSO₃Li concentration relative to LiFSI (sulfonylimide compound) | | |
|---|---|---|---|---|---|---|---|---|---|---|---|---|---|
| | LiFSI/H₂O (Concentration of LiFSI [mass%]) | H₂NSO₃Li | Li₂CO₃ | DMC | EMC | Temperature (°C) | Time (h) | Pressure | Befor heating | After heating | Before heating [ppm by mass] | After heating [ppm by mass] | Reduction rate |
| Example 1 | 50.5 (500%) | | | | | 60 | 15 | Normal pressure | 50.0% | 51.4% | 1687.7 | 728.0 | 56.9% |
| Example 2 | 50.58 (50.0%) | 0.24 | | | | 90 | 9 | Normal pressure | 49.8% | 50.9% | 1972.1 | 0.0 | 100.0% |
| Example 3 | 50.56 (50.0%) | 0.12 | 0.16 | | | 90 | 9 | Normal pressure | 49.7% | 50.9% | 1973.8 | 104.5 | 94.7% |
| Example 4 | 50.21 (70.0%) | | | | | 90 | 9 | Normal pressure | 70.0% | 70.2% | 1378.5 | 0.0 | 100.0% |
| Example 5 | 22.73 (70.0%) | | | 25.17 | | 90 | 9 | Normal pressure | 33.2% | 33.3% | 1458.9 | 572.6 | 60.7% |
| Example 6 | 22.11 (70.0%) | 0.10 | | | 24.32 | 60 | 15 | Normal pressure | 33.3% | 33.5% | 1539.4 | 710.4 | 53.8% |
| Example 7 | 50.26 (50.0%) | | | 16.43 | | 70 | 23 | Pressure (15 kPa) | 37.7% | 40.3% | 2740.6 | 1312.0 | 52.1% |

The results shown in Table 1 indicate that the amount of FSO₃Li in each of the aqueous LiFSI solutions of Examples 1 to 7 was significantly reduced by the heating. It was also found that FSO₃Li was reduced regardless of whether the anionic component was added to the aqueous LiFSI solution. In other words, it can be said that the addition of the anionic component hardly affects the reduction of FSO₃Li by the heating.

The results shown in FIG. 1 indicate that the FSO₃Li concentration was reduced by half in about two hours when the heating was performed at 90°C and that the concentration was linearly reduced for about four hours (the reduction rate was high).

### <Example 8>

To the heated aqueous LiFSI solution obtained in Example 3, 38.51 g of DMC was added to obtain a water-containing LiFSI solution for dehydration. Subsequently, the water-containing LiFSI solution for dehydration was dehydrated at a temperature of 60°C under a reduced pressure of 8 kPa for 20 hours (dehydrating, the same applies hereinafter) to obtain a LiFSI/DMC solution (non-aqueous electrolyte solution) containing 39.6 mass% LiFSI. The dehydrating reduced the FSO₃Li concentration from 104.5 ppm by mass (FSO₃Li concentration in the aqueous LiFSI solution after the heating and before the dehydrating, the same applies hereinafter) to 40.4 ppm by mass (FSO₃Li concentration in the non-aqueous electrolyte solution after the dehydrating, the same applies hereinafter).

### <Example 9>

To the heated aqueous LiFSI solution obtained in Example 3, 60.11 g of EMC was added to obtain a water-containing LiFSI solution for dehydration. Subsequently, the water-containing LiFSI solution for dehydration was dehydrated at a temperature of 60°C under a reduced pressure of 8 kPa for 15 hours to obtain a LiF SI/EMC solution (non-aqueous electrolyte solution) containing 29.6 mass% LiFSI. The dehydration reduced the FSO₃Li concentration from 104.5 ppm by mass to 84.5 ppm by mass.

### [Evaluation of Non-Aqueous Electrolyte Solution]

Each of the non-aqueous electrolyte solutions obtained in Examples was stored at 40°C for a predetermined period shown in Table 2. The concentration of LiFSI in each of the LiFSI solutions was measured before and after the storage by the following method, and the concentrations of the anionic impurities (F⁻, SO₄²⁻, and FSO₃Li) relative to the sulfonylimide compound (LiFSI) in the solution were measured in the same manner as described above. Table 2 shows the results. In Table 2, "N.D." means the concentration was lower than the detection limit.

### [Concentration of LiFSI]

The concentration of LiFSI in the aqueous LiFSI solution was measured by ¹⁹F-NMR. For the ¹⁹F-NMR measurement, a system "Unity Plus-400" manufactured by Varian Inc. (internal reference material: trifluorotoluene, number of measurements: 64) was used.

**[Table 2]**

| | Storage period (Month) | Concentration of anionic impurities relative to LiFSI in non-aqueous electrolyte solution | | | | | | LiFSI [mass%] | |
|---|---|---|---|---|---|---|---|---|---|
| | | F⁻ [ppm by mass] | | SO₄²⁻ [ppm by mass] | | FSO₃Li [ppm by mass] | | | |
| | | Before storage | After storage | Before storage | After storage | Before storage | After storage | Before storage | After storage |
| Example 8 | 4 | 6.6 | 4.5 | N.D. | 4.3 | 40.4 | 75.8 | 39.6 | 39.6 |
| Example 9 | 2 | 62.5 | 69.9 | N.D. | N.D. | 84.5 | 0.0 | 29.6 | 29.6 |

The results shown in Table 2 indicate that the FSO₃Li concentration in each of the aqueous LiFSI solutions of Examples heated and dehydrated (containing DMC or EMC) was less than 100 ppm by mass. The concentrations of the impurities in the non-aqueous electrolyte solution hardly increased after the storage compared to the concentrations before the storage, and the LiFSI concentration showed no change. As described above, it was confirmed that FSO₃Li was sufficiently reduced in each of the non-aqueous electrolyte solutions of Examples by heating the aqueous LiFSI solution used as the raw material, and that the generation of the impurities such as SO₄²⁻ was reduced even during long-term storage for two to four months, reducing the decomposition of LiFSI. That is, it can be said that each of the non-aqueous electrolyte solutions of Examples has excellent long-term storage stability.

### <Example 10>

The LiFSI/DMC solution (non-aqueous electrolyte solution) containing 40 mass% LiFSI obtained in Example 8, weighed 11.98 g, was charged into an eggplant flask together with 40.09 g of 1,1,2,2-tetrachloroethane (TCE), heated in an oil bath at about 50°C, and concentrated under reduced pressure in a rotary evaporator to distill the solvent such as DMC from the solution (powdering, the same applies hereinafter). After crystal precipitation, the pressure was returned to normal pressure, 40.38 g of TCE was added, and concentration was carried out again under reduced pressure. As a result, the solvent in the flask was removed to obtain white powder (electrolyte composition). An analysis of the obtained white powder showed that the amount of FSO₃Li was equal to or lower than the detection limit.

### <Example 11>

The LiFSI/EMC solution (non-aqueous electrolyte solution) containing 30 mass% LiFSI obtained in Example 9, weighed 16.84 g, was charged into an eggplant flask together with 40.36 g of 1,2-dichlorobenzene (DCB), heated in an oil bath at about 50°C, and concentrated under reduced pressure in a rotary evaporator to distill the solvent such as EMC from the solution. After crystal precipitation, the pressure was returned to normal pressure, 40.21 g of DCB was added, and concentration was carried out again under reduced pressure. As a result, the solvent in the flask was removed to obtain white powder (electrolyte composition). An analysis of the obtained white powder showed that the amount of FSO₃Li was equal to or lower than the detection limit.

### INDUSTRIAL APPLICABILITY

As described above, the present disclosure is suitable for an aqueous sulfonylimide solution that can be used as a raw material of a non-aqueous electrolyte solution, a non-aqueous electrolyte solution, and an electrolyte composition.

## Claims

1. A method for purifying an aqueous sulfonylimide solution, the method
comprising:
heating an aqueous sulfonylimide solution containing FSO₃Li and a sulfonylimide compound represented by the general formula (1):
LiN(RSO₂)(FSO₂) (1)
where R represents a fluorine atom, an alkyl group with 1 to 6 carbon atoms, or a fluoroalkyl group with 1 to 6 carbon atoms,
the heating is to reduce the concentration of FSO₃Li in the aqueous sulfonylimide solution,
an anionic component is added to the aqueous sulfonylimide solution before the heating,
the anionic component is at least one selected from the group consisting of an amidosulfuric acid component, an acetic acid component, a carbonic acid component, and a phosphoric acid component,
the amidosulfuric acid component is at least one selected from the group consisting of amidosulfuric acid and a salt thereof, and an amidosulfuric acid derivative and a salt thereof, wherein the amidosulfuric acid derivative and the salt thereof is a compound represented by the following formula (2) 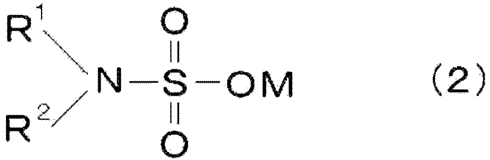
wherein R¹ and R² each represent H (hydrogen atom), a hydroxyl group, or an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and R¹ and R² may each contain a heteroatom and form a ring structure. R¹ and R² may be identical to or different from each other when representing the group other than H (when either one of R¹ and R² is H, R¹ and R² are not identical to each other (R¹ and R² do not simultaneously represent H)). M represents H (hydrogen atom) or a metal atom,
the acetic acid component is a compound represented by the following formula (3)
R³COOM (3)
wherein R³ represents H (hydrogen atom), or an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and may contain a heteroatom, and M is the same as defined above,
the carbonic acid component is carbonate or bicarbonate,
the phosphoric acid component is phosphate, hydrogen phosphate or dihydrogen phosphate.
the heating is performed at 60°C or more and 120°C or less,
the heating time is 3 hours or more.

2. The method for purifying an aqueous sulfonylimide solution of claim 1, wherein
the heating is performed at 30 kPa or less.

3. A method for producing a non-aqueous electrolyte solution containing the sulfonylimide compound represented by the general formula (1) as an electrolyte and an electrolyte solution solvent, wherein
the electrolyte solution solvent is added to the aqueous sulfonylimide solution purified by the purification method of any one of claims 1 to 2 to dehydrate the aqueous sulfonylimide solution.

4. The method for producing a non-aqueous electrolyte solution of claim 3, wherein
the electrolyte solution solvent is a carbonate solvent.

5. A method for producing an electrolyte composition containing the sulfonylimide compound represented by the general formula (1) as an electrolyte, the method comprising:
distilling off the electrolyte solution solvent from the non-aqueous electrolyte solution obtained by the production method of any one of claims 3 to 4.

## Patentansprüche

1. Verfahren zum Reinigen einer wässrigen Sulfonylamidlösung, das Verfahren Folgendes umfasst:
Erwärmen einer wässrigen Sulfonylamidlösung, die FSO₃Li und eine Sulfonylamidverbindung enthält, die durch die allgemeine Formel (1) dargestellt wird:
LiN(RSO₂)(FSO₂) (1)
wobei X ein Fluoratom, eine Alkylgruppe mit 1 bis 6 Kohlenstoffatomen oder eine Fluoralkylgruppe mit 1 bis 6 Kohlenstoffatomen darstellt,
das Erwärmen dazu dient, die Konzentration von FSO₃Li in der wässrigen Sulfonylamidlösung zu reduzieren,
der wässrigen Sulfonylamidlösung vor dem Erwärmen eine anionische Komponente zugegeben wird,
die anionische Komponente mindestens eine ausgewählte aus der Gruppe ist, die aus einer Amidoschwefelsäurekomponente, einer Essigsäurekomponente, einer Kohlensäurekomponente und einer Phosphorsäurekomponente besteht,
die Amidoschwefelsäurekomponente mindestens eine ausgewählte aus der Gruppe ist, die aus Amidoschwefelsäure und einem Salz davon sowie einem Amidoschwefelsäurederivat und einem Salz davon besteht, wobei das Amidoschwefelsäurederivat und das Salz davon eine Verbindung ist, die durch die folgende Formel (2) dargestellt wird 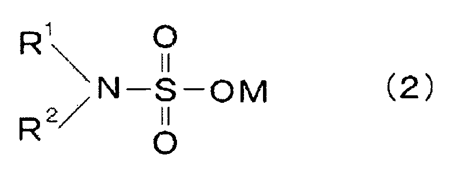
wobei R¹ und R² jeweils für H (Wasserstoffatom), eine Hydroxylgruppe oder eine Alkylgruppe mit 1 bis 10 Kohlenstoffatomen, eine Cycloalkylgruppe mit 3 bis 10 Kohlenstoffatomen stehen, eine Arylgruppe mit 6 bis 16 Kohlenstoffatomen, eine Aralkylgruppe mit 7 bis 16 Kohlenstoffatomen oder eine Alkanoylgruppe mit 2 bis 16 Kohlenstoffatomen, die jeweils optional einen Substituenten aufweisen, stehen, und R¹ und R² können jeweils ein Heteroatom enthalten und eine Ringstruktur bilden. R¹ und R² können identisch sein oder sich voneinander unterscheiden, wenn sie für eine andere Gruppe als H stehen (wenn entweder R¹ oder R² H ist, sind R¹ und R² nicht identisch (R¹ und R² stehen nicht gleichzeitig für H)). M steht für H (Wasserstoffatom) oder ein Metallatom,
die Essigsäurekomponente ist eine Verbindung, die durch die folgenden Formel (3) dargestellt wird
R³COOM (3)
wobei R³ für H (Wasserstoffatom) oder eine Alkylgruppe mit 1 bis 10 Kohlenstoffatomen, eine Cycloalkylgruppe mit 3 bis 10 Kohlenstoffatomen, eine Arylgruppe mit 6 bis 16 Kohlenstoffatomen, eine Aralkylgruppe mit 7 bis 16 Kohlenstoffatomen oder eine Alkanoylgruppe mit 2 bis 16 Kohlenstoffatomen, die jeweils optional einen Substituenten aufweisen, steht und ein Heteroatom enthalten kann, und M wie oben definiert ist,
die Kohlensäurekomponente Carbonat oder Bicarbonat ist,
die Phosphorsäurekomponente Phosphat, Wasserstoffphosphat oder Diwasserstoffphosphat ist.
das Erwärmen bei 60 °C oder mehr und 120 °C oder weniger durchgeführt wird,
die Erwärmungszeit 3 Stunden oder mehr beträgt.

2. Verfahren zum Reinigen einer wässrigen Sulfonylamidlösung nach Anspruch 1, wobei
das Erwärmen bei 30 kPa oder weniger durchgeführt wird.

3. Verfahren zum Herstellen einer nichtwässrigen Elektrolytlösung, die die durch die allgemeine Formel (1) dargestellte Sulfonylamidverbindung als Elektrolyt und ein Elektrolytlösungslösemittel enthält, wobei
das Elektrolytlösungslösemittel zu der wässrigen Sulfonylamidlösung gegeben wird, die durch das Reinigungsverfahren nach einem der Ansprüche 1 bis 2 gereinigt wurde, um die wässrige Sulfonylamidlösung zu dehydrieren.

4. Verfahren zum Herstellen einer nichtwässrigen Elektrolytlösung nach Anspruch 3, wobei
das Elektrolytlösungslösemittel ein Carbonatlösemittel ist.

5. Verfahren zum Herstellen einer Elektrolytzusammensetzung, die die durch die allgemeine Formel (1) dargestellte Sulfonylamidverbindung als Elektrolyt enthält, wobei das Verfahren Folgendes umfasst:
Destillieren des Elektrolytlösungslösemittels aus der nichtwässrigen Elektrolytlösung, die durch das Herstellungsverfahren nach einem der Ansprüche 3 bis 4 erhalten wird.

## Revendications

1. Procédé de purification d'une solution aqueuse de sulfonylimide, le procédé comprenant :
le chauffage d'une solution aqueuse de sulfonylimide contenant du FSO₃Li et un composé de sulfonylimide représenté par la formule générale (1) :
LiN(RSO₂)(FSO₂) (1)
où R représente un atome de fluor, un groupe alkyle ayant 1 à 6 atomes de carbone ou un groupe fluoroalkyle ayant 1 à 6 atomes de carbone,
le chauffage vise à réduire la concentration de FSO₃Li dans la solution aqueuse de sulfonylimide,
un composant anionique est ajouté à la solution aqueuse de sulfonylimide avant le chauffage,
le composant anionique est au moins un choisi dans le groupe constitué par un composant acide amidosulfurique, un composant acide acétique, un composant acide carbonique et un composant acide phosphorique,
le composant acide amidosulfurique est au moins un choisi dans le groupe constitué par l'acide amidosulfurique et un sel de celui-ci, et un dérivé d'acide amidosulfurique et un sel de celui-ci, dans lequel le dérivé d'acide amidosulfurique et le sel de celui-ci est un composé représenté par la formule (2) suivante 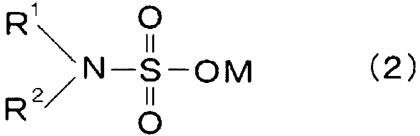
dans laquelle R¹ et R² représentent chacun H (atome d'hydrogène), un groupe hydroxyle, ou un groupe alkyle ayant 1 à 10 atomes de carbone, un groupe cycloalkyle ayant 3 à 10 atomes de carbone, un groupe aryle ayant 6 à 16 atomes de carbone, un groupe aralkyle ayant 7 à 16 atomes de carbone ou un groupe alcanoyle ayant 2 à 16 atomes de carbone, chacun ayant éventuellement un substituant, et R¹ et R² peuvent chacun contenir un hétéroatome et former une structure cyclique, R¹ et R² peuvent être identiques ou différents l'un de l'autre lorsqu'ils représentent le groupe autre que H (lorsque l'un ou l'autre de R¹ et R² est H, R¹ et R² ne sont pas identiques l'un à l'autre (R¹ et R² ne représentent pas simultanément H)). M représente H (atome d'hydrogène) ou un atome métallique,
le composant acide acétique est un composé représenté par la formule (3) suivante
R³COOM (3)
dans laquelle R³ représente H (atome d'hydrogène) ou un groupe alkyle ayant 1 à 10 atomes de carbone, un groupe cycloalkyle ayant 3 à 10 atomes de carbone, un groupe aryle ayant 6 à 16 atomes de carbone, un groupe aralkyle ayant 7 à 16 atomes de carbone ou un groupe alcanoyle ayant 2 à 16 atomes de carbone, chacun ayant éventuellement un substituant, et peut contenir un hétéroatome, et M est tel que défini ci-dessus,
le composant acide carbonique est un carbonate ou un bicarbonate,
le composant acide phosphorique est un phosphate, un hydrogénophosphate ou un dihydrogénophosphate.
le chauffage est effectué à une température supérieure ou égale à 60°C et inférieure ou égale à 120°C,
le temps de chauffage est de 3 heures ou plus.

2. Procédé de purification d'une solution aqueuse de sulfonylimide de la revendication 1, dans lequel
le chauffage est effectué à 30 kPa ou moins.

3. Procédé de production d'une solution électrolytique non aqueuse contenant le composé sulfonylimide représenté par la formule générale (1) en tant qu'électrolyte et un solvant de solution électrolytique, dans lequel
le solvant de solution électrolytique est ajouté à la solution aqueuse de sulfonylimide purifiée par le procédé de purification de l'une quelconque des revendications 1 et 2 afin de déshydrater la solution aqueuse de sulfonylimide.

4. Procédé de production d'une solution électrolytique non aqueuse de la revendication 3, dans lequel
le solvant de solution électrolytique est un solvant carbonate.

5. Procédé de production d'une composition électrolytique contenant le composé sulfonylimide représenté par la formule générale (1) en tant qu'électrolyte, le procédé comprenant :
l'élimination par distillation du solvant de solution électrolytique de la solution électrolytique non aqueuse obtenue par le procédé de production de l'une quelconque des revendications 3 et 4.
